# EUROPEAN PATENT SPECIFICATION

(11) **EP 4 671 329 B1**
(45) Date of publication and mention of the grant of the patent: **18.11.2026**
(21) Application number: 25173808.4
(22) Date of filing: 30.04.2025
(51) Int. Cl.: C08L 97/02

(54) **COMPOSITE MATERIAL BASED ON FOAMED WOOD, ITS PRODUCTION METHOD AND USE THEREOF**
VERBUNDWERKSTOFF AUF BASIS VON GESCHÄUMTEM HOLZ, VERFAHREN ZU SEINER HERSTELLUNG UND SEINE VERWENDUNG
MATÉRIAU COMPOSITE À BASE DE BOIS EXPANSÉ, SON PROCÉDÉ DE FABRICATION ET SON UTILISATION

(30) Priority: 28.06.2024 CZ 20240264; 28.06.2024 CZ 202442074 U
(43) Date of publication of application: 31.12.2025
(73) Proprietor: Ceská zemedelská univerzita v Praze, 165 00 Praha 6 (CZ)
(72) Inventor: Kubista, Krystof, 25081 Nehvizdy (CZ); Sedivka, Premysl, 54401 Dvur Kralove nad Labem (CZ); Dvorak, Ondrej, 39901 Milevsko (CZ); Horak, Petr, 39701 Pisek (CZ)
(74) Representative: Harber IP s.r.o.

(56) References cited:
- WO-A1-2021/140242

## Description

### Technical Field

The present invention relates to a composite material based on foamed wood, a method of its production by foaming wood and its use as a structural and/or thermal-insulating and/or acoustic-insulating material. The composite material can be used for application to the column structure of the external shell of a residential wooden building, which significantly increases acoustic soundproofing with optimal mechanical, thermal-insulating, heat-accumulating and fire-prevention properties while maintaining strength and full renewability for structural applications.

### Background Art

Thermal insulation materials are produced from a wide range of inorganic materials, such as pressed basalt and/or glass fiber, and also from organic materials such as expanded polystyrene, polyurethane, pressed sheep fleece, cork, hemp and/or wood fiber. However, these materials generally do not meet the mechanical and strength requirements imposed on construction materials. From the point of view of the foaming process, wood fiber foaming processes are known, but the foaming process is followed by a material stabilization phase, for which a synthetic polymer based on thermoplastics, such as polyethylene (PE), polypropylene (PP), polyvinyl chloride (PVC) and/or their compounds, which are, however, petroleum derivatives, is applied as an effective stabilizing agent. The foaming process is also used for the production of thermal insulation based on expanded polystyrene, the production principle of which is the suspension polymerization of styrene (C₈H₈) using an aliphatic hydrocarbon blowing agent, such as pentane (C₅H₁₂). Also known are processes for foaming a geopolymer, the essence of which is an aluminosilicate binder, for example based on metakaolin with a composition of SiO₂ (50.0 %), Al₂O₃ (46.0 %), Fe₂O₃ (0.5 %), CaO (0.5 %), MgO (0.1 %), Na₂O₃ (0.1 %), K₂O (0.6 %) wt. % in an amount from 40 to 42 wt. %, class C fly ash in an amount from 10 to 12 wt. %, activated for example with an effective alkaline sodium silicate (Na₂SiO₃) activator in an amount from 45 to 47 wt. %, with the proportion of disintegrated silicon chip based on silicon carbide SiC in an amount from 4.0 to 5.2 wt. % and aluminum powder in an amount from 0.3 to 0.6 wt. % based on the total weight of the geopolymer. These geopolymers are mainly used as building materials, not as thermal insulation materials. However, there are increasing demands for the use of natural, fully renewable materials with optimal acoustic, thermal insulation and strength parameters to reduce the carbon footprint. For all foamed wood-based materials developed so far, not all of the above requirements are optimal; foaming processes are mainly focused on foaming and subsequent stabilization with synthetic polymers based on plastics, wood fibers and plastics, wood flour and plastics, rice and plastics. Foamed polymers based on synthetic plastics are not spontaneously biodegradable and, when ignited, they release toxic substances, and are also highly hazardous to health in the closed space of residential buildings. Foamed insulation using wood fiber has the disadvantage that the production of wood fiber is technologically and energy-intensive, and is also unsuitable and cost-ineffective for small or medium-sized production capacities.

There are many ways to produce materials through the foaming process:
One of them is the process of converting a compact plastic molded body into porous bodies with approximately three times the volume while maintaining its shape, in which the reaction of thermoplastics with insoluble liquids such as polystyrene with methanol at high temperature and pressure is designed, when insoluble liquids are distributed in the thermoplastic melt in closed containers and then the containers, which are under high pressure, are released. The insoluble liquids evaporate and foam the plastic melt, which is then allowed to cool. However, this method only solves the foaming of plastics and is very energy-consuming.

The method of manufacturing porous shaped bodies based on fine-grained thermoplastics of polymethacrylic acid esters, polyvinyl chloride, polyvinylcarbazole, polyacrylic acid is based on expanding them in molds by heating and sintering. This material can be used for the production of plates, containers, toys, figurines and other products where an attractive appearance combined with high surface hardness, surface gloss and abrasion resistance is required.

Also known is a composite material based on a synthetic polymer (polyvinyl chloride (PVC), chlorinated polyvinyl chloride (CPVC), polystyrene, acrylonitrile-butadiene-styrene (ABS) type) and wood flour. This is a material, which, however, does not have thermal insulation properties and the ability to increase impact and air sound insulation.

Another composite material is based on wood fraction particles with regenerated polypropylene (PP), stearic acid, maleic anhydride with a molecular weight of 5,000-30,000, titanate coupling agent, nanoabsorbent, auxiliary foaming agent and super-micronucleating agent based on low-density polyethylene (LDPE), vinyl acetate copolymer, azodicarbonamide and stearic acid or its salts. This material is intended to replace thermoplastics for the production of products with complex shapes.

Foam board can be made by mixing and reacting methyl chloride with toluene diisocyanate, to which wood flour is added, until a foamed polyurethane is formed, which is allowed to cool and harden. The polyurethane is the stabilizing component of the foam board.

For example, foamed wood can be prepared from the components of wood powder, polyvinyl chloride (PVC) powder, lime powder, anti-UV agent, colorant, organotin stabilizer and foaming agent. The mixture is uniformly mixed into a gel state, then the composition is heated in an extruder to about 210 ° C to form a semi-condensate, which can be extruded by an extruder to obtain a finished foamed wood product.

Foamed HDPE wood can also be manufactured in the form of a plastic profile and prepared from 20-50 % of HDPE (High-Density Polyethylene) matrix, 8-13 % of POE powder (Polyoxyethelene), 30-60 % of wood flour pretreated with a composite antibacterial agent chitosan-nano silver, 2-4 % of nano calcium oxide powder with a particle size of 100-500 nm, 2-4 % of long-chain alkyl and polyether co-modified silicone oil, 0.5-5 % of lubricant, 0.5-5 % of AC foaming agent (Azodicarbonamide), and 0.5-0.8 % of anti-aging agent. The foamed HDPE wood-plastic profile has the advantage that the profile prepared by this method has high strength, a smooth and shiny appearance, has good antibacterial properties and is not subject to degradation due to aging.

Also known is a combined board, beam, column and brick made of plastic and foam material, comprising plastic and wood materials, inorganic foam materials or organic foam materials and auxiliary materials, wherein the plastic and wood materials are bonded together by means of inorganic foam. The materials, organic or inorganic foam materials are filled into the cavities between the plastic and wood materials, and the inorganic or organic foam materials are bonded together with the plastic and wood materials.

Another PE foam wood-plastic composite material has excellent foaming and high strength, and contains wood powder particles, polyethylene, foaming agent, epoxy resin filler, lignin, lubricating agent, stearic acid, antioxidant, compatibilizer, impact processing modifier and colorant. The PE foam wood-plastic composite material and its preparation method have the advantage of sufficiently guaranteeing the integrity of the wood fibers; by selecting a reasonable formula and a suitable processing process, the interface compatibility of the PE foam wood-plastic composite material is improved, and the mechanical properties of the PE foam wood-plastic composite material are also demonstrably improved.

PVC (polyvinyl chloride) wood-plastic floor with foamed filling (wood-plastic foam floor) is made of plastics, organic filler, auxiliary agent, modifier, foaming agent and other raw materials, and the weight parts of the raw materials are specifically optimized. After being heated and melted by a thermoforming device, the wood-plastic foam floor is foamed in a molding die with a special structure to obtain a new wood-plastic foam floor profile with continuously and evenly distributed foam micropores. PVC wood-plastic foam floor has the advantages of light weight, high specific strength, waterproofness, corrosion resistance. It can be mechanically nailed, cut and planed just like wood.

Bagasse/LDPE and PP foamed wood-plastic composite material consists of the following components in weight proportions: 20-40% bagasse, 50-80% low-density polyethylene and polypropylene blend and 1-3% foaming agent. A molding method is used to prepare the foamed wood-plastic composite material, which includes the steps of pre-treating bagasse, mixing and pelletizing bagasse, low-density polyethylene and polypropylene, mixing the particles with a foaming agent, followed by drying and injection molding. According to the method, waste low-density polyethylene (LDPE) and polypropylene (PP) are taken as the substrate.

An injection microcellular foamed wood-plastic composite material is composed of wood-plastic pellets and foaming masterbatches, wherein the wood-plastic pellets contain components of wood powder with a grain size of 100-200 mesh, regenerated polypropylene (PP), stearic acid or its salt, grafted maleic anhydride with a molecular weight of 5,000-30,000, titanate coupling agent, nanoabsorbent, nano auxiliary foaming agent, super-micronucleating agent and a foaming masterbatche comprising low-density polyethylene (LDPE), vinyl acetate copolymer, azodicarbonamide and stearic acid or its salt. The preparation includes mixing the wood-plastic pellets and the foaming masterbatches in a ratio of 15:4 to 17:4, injection and foaming to prepare the injection microcellular foamed wood-plastic composite material. Composite material is characterized by low weight, high strength and toughness, low price, can widely replace plastics and is used for the production of products with complex shapes.

A method of preparing a wood-plastic profile from expanded polystyrene includes weighing polystyrene, wood flour, calcium carbonate, kaolin, talc powder, SBS (Styrene-butadiene-styrene; styrene-butadiene-styrene), glycerol, polystyrene grafted with maleic anhydride, azodicarbonamide, acrylate foam regulator, chlorinated polyethylene and dye. Mixing the weighed polystyrene, wood flour and calcium carbonate, heating, adding kaolin, talc, SBS, glycerol, polystyrene modified with maleic anhydride and azodicarbonamide, subsequent melting, mixing and granulating the mixed materials using a twin-screw extruder, drying the obtained granules and extruding through a single-screw extruder into the shape of the desired profile.

The method of modifying wood using foamed isocyanate resin consists of placing the wood in a pressure-resistant autoclave, applying a vacuum at room temperature, injecting the foamed isocyanate resin into the autoclave and immersing the wood. Air is supplied to achieve atmospheric pressure in the autoclave. The impregnated wood is again brought into a vacuum in the autoclave, a catalyst solution is injected, the wood is immersed and then pressurized. This is followed by draining the catalyst solution, heating at atmospheric pressure for foaming and curing, and then drying and cooling. The foamed isocyanate resin can be used to simultaneously improve the mechanical strength and dimensional stability of wood.

Another foam product containing wood flour is produced by mixing and heating wood flour, hydrophilic macromolecule, polyolefin type resin and water for foaming. The entire configuration of the foam product is formed in a state where a plurality of rod-shaped bodies with a diameter of 3 to 20 mm are attached and bonded to each other at their surfaces. Further, each of the rod-shaped bodies is constructed with an inner foam layer and a surface layer that covers the foam layer and has an average thickness of 15 to 25 µm. The wood flour contains paper powder. The polyolefin resin contains particulate polyvinyl chloride with an average particle size of 0.02 to 200 µm and an average degree of polymerization of 400 to 3000. The foam product containing wood flour contains calcium carbonate and a plasticizer.

Another foamed wood-plastic material is produced by recycling reclaimed materials contains, by weight, 50-100% recycled waste PVC (polyvinyl chloride), 10-30% reclaimed printed circuit boards, 50-100% reclaimed foam granules, 5-20% wood flour, 10-30% calcium carbonate, 0.5-2% foaming agent, 2-5% stabilizer, 0.5-2% lubricant and 5-12% regulator.

Another foamed wood-plastic composite material contains 50-60 parts by weight of wood powder, 20-30 parts by weight of polypropylene, 20-25 parts by weight of polyethylene, 5-8% by weight of ethacrylate, 2-6 parts by weight of sodium bicarbonate and 3-5 parts by weight of a resin based on a petroleum derivative. The wood powder allows a good combination with the polymer, no air bubbles or pits are formed after heating, and it is highly impact resistant.

CN102775695 describes a microfoam wood-plastic composite board, which is prepared by mechanically mixing at higher temperatures plastic particles of polyvinyl chloride and stabilizer, wood flour, calcium carbonate powder, polyethylene wax, terpene resin, stearic acid, calcium stearate, chlorinated polyethylene and a foaming agent, after cooling, the mixture is extruded into the desired shape using an extruder. The microfoam wood-plastic composite board has a wide range of applications and is applicable in various fields such as transportation, construction, municipal construction, gardens, packaging and the like, and can also be used as a material for photo frames, picture frames and roofs. Microfoam wood plastic composite board is not only recyclable and low cost, but also has lower density and advantageous mechanical properties such as static bending strength, therefore microfoam wood plastic composite board is an ideal material for wood replacement and is a new improved product of existing wood plastic composites.

WO2021/140242 A1 discloses an open-cell wood foam having a density of 30-300 kg/m³, comprising wood particles such as wood fibers, a stabilizing protein and air as a foaming agent.

A low-cost method for preparing a foamed plastic-wood material includes mixing wood flour, thermoplastic plastic powder and mineral powder to obtain a plastic-wood mixture, mixing ultraviolet stabilizer powder, antioxidant, mineral lubricating oil, ethyl acetate, ethylene carbonate and glycerin to obtain a dispersion medium, adding the plastic-wood mixture to the dispersion medium for mixing to prepare a gel, then introducing gas into the gel to form bubbles, softening the resin by microwave heating, combining and foaming the wood flour to form and performing cooling and curing to obtain a foamed plastic-wood material.

There is also a composite sandwich panel made of bamboo, wood and foamed aluminum, which is formed by bonding and pressing the surface layer, the core layer and the bottom layer. The foamed aluminum is taken as the core layer, and the bamboo and/or wood are taken as the surface layer and/or the bottom layer, or the foamed aluminum is taken as the core layer, the bamboo and/or wood are glued to one side of the foamed aluminum, and the other side of the foamed aluminum is directly subjected to one-step pressing with the steel sheet. The production method includes performing sand treatment on the joint planes of the manufactured materials of the surface layer and the bottom layer, bonding the joint planes of the surface layer and the bottom layer and the two sides of the foamed aluminum, assembling and pressing on a press, and performing compound pressing. The bamboo, wood and foam aluminum sandwich panel has light weight, high specific rigidity, high vibration damping performance, and obvious superiority in sound absorption and electromagnetic shielding, and can be widely applied to the core material of several materials such as furniture board, floor board, decoration material, electromagnetic shielding material and sound-proof wall board.

PVC plastic composite material with high hardness and wood crust on the surface contains 100 parts by weight of PVC resin powder, 50-60 parts by weight of wood flour, 0.8-2 parts by weight of coupling agent, 2.3-4 parts by weight of heat stabilizer, 0.2-10 parts by weight of lubricant and 0.3-0.8 parts by weight of foaming agent. The plastic-wood foam material has excellent toughness, strong friction resistance, good water and weather resistance and low price. It can be used in the construction of decorative profiles, floors, skirting boards, railings, garden rafters, which are products that use plastic instead of wood.

Polyvinyl chloride (PVC) foamed wood-plastic flooring material contains by weight 100 parts of PVC regenerated resin, 45-55 parts of straw fibers, 45-65 parts of calcium carbonate, 10-20 parts of tetrabromobisphenol A, 3-5 parts of aluminate, 3-5 parts of zinc stearate, 0.5-1 part of antioxidant CA, 0.5-0.8 parts of p-toluenesulfonyl-semicarbazide, 0.4-0.6 parts of sodium carbonate, 0.4-0.8 parts of butyl acrylate and 1 part of soybean oil. A method for preparing this wood-plastic flooring material from foamed PVC is also known.

The wood-based foam plastic profile with a PE matrix falls into the category of composite materials and contains by weight 30-45 parts of PE, 5-20 parts of chitosan, 0.5-4 parts of lubricants, 50-65 parts of plant fiber and 0.3-2 parts of antioxidants. The method of preparing this profile is also known. The wood-based foam plastic profile with a PE matrix has high foaming efficiency, low density, high strength, and contains uniform and fine foam bubbles.

The PE foamed wood-plastic board contains by weight 30-60 parts of cotton straw powder, 40-70 parts of waste plastic, 5-8 parts of perlite, 10-13 parts of magnesium silicate, 3-6 parts of PE foam, 4-7 parts of antioxidant, 5-8 parts of stabilizer, 30-60 parts of silicon dioxide, 1-4 parts of impact modifier, 0.6-1 part of auxiliary materials, 4-6 parts of binder, 0.1-0.4 parts of auxiliary stabilizer and 0.5-0.9 parts of lubricant. The PE foamed wood-plastic board and the method of producing it, which is also known, have the advantage that the added stabilizer is a rare earth stabilizer, which is resistant to weathering and can absorb ultraviolet radiation.

However, all of the above-described materials contain plastic and therefore do not meet the requirement for natural fully renewable materials for reducing the carbon footprint and spontaneous biodegradability. In addition, the presence of plastic when the material ignites leads to the release of toxic substances (plastic combustion products), which can be highly hazardous to health in the closed space of residential buildings. The state of the art lacks a material based on foamed wood that would meet the high demands on mechanical and strength requirements placed on construction materials, and at the same time have suitable thermal insulation properties and do not contain synthetic polymers (thermoplastics). The aim of the present invention is to provide such a biodegradable material using natural fully renewable materials with optimal acoustic, thermal insulation and strength parameters for reducing the carbon footprint, which would not contain synthetic polymers based on plastics.

### Disclosure of Invention

The present invention relates to a composite material based on foamed wood, the method of its production and its use. The wood in said material is in the form of a wood flour, wood fibers, lignin and/or industrial hemp.

### Definitions

kaolin = rock containing the mineral kaolinite and small quartz grains
kaolinite = mineral, clay material containing a mixture of aluminosilicates
laboratory temperature = approximately 25 °C
slurry = a mixture of denser solids suspended in liquid
lignin = amorphous component of wood - a high-molecular polyphenolic amorphous substance whose basic building blocks are p-coumaryl alcohol, coniferyl alcohol and sinapyl alcohol, which are bound into three-dimensional structures by ether bonds or carbon-carbon bonds; lignin is a waste product in paper production.

An object of the present invention is a composite material based on foamed wood, which comprises a wood component with mean particle size in the range of from 1 nm to 5 mm (determined using scanning electron microscopy (SEM) on a TESCAN MIRA3 device (Tescan Orsay Holding, a.s., Czech Republic) and, subsequently, digital image analysis was used to evaluate the number of particles by the statistical method of normal distribution), a stabilizer, and a foaming agent;
wherein
the wood component is selected from the group comprising wood flour, wood fibers, lignin (for example, commercially available sulfite or sulfate lignin) and/or disintegrated industrial hemp; and wherein the stabilizer is a hemp protein;
and wherein the foaming agent is selected from the group comprising
   - synthetic foaming agents (for example, fatty alcohol ethoxylate of the general formula R(OCH₂CH₂)ₙOH, fatty alcohol ethoxysulfate of the general formula R(OC₂H₄)ₙOSO₃H, alkaline salt of fatty alcohol ethoxysulfate of the general formula R(OC₂H₄)ₙOSO₃M, alkaline salt of fatty alcohol sulfate of the general formula ROSO₃M and poly(ethylene glycol) methyl ether methacrylate of the general formula H₂C=CCH₃CO₂(CH₂CH₂O)ₙCH₃, wherein R is (C8 to C22)alkyl, preferably (C12 to C18)alkyl, more preferably (C12 to C14)alkyl, *n* is an integer in the range of from 1 to 12, preferably from 2 to 10, and M is K⁺ or Na⁺ or NH₄⁺,
   - and natural foaming agents (for example, live cultures of natural yeasts of the *Saccharomycetaceae* family, specifically of the species *Saccharomyces cerevisiae*).

In one embodiment, the composite material based on foamed wood comprises a wood component with particle size in the range of from 1 nm to 5 mm (determined by scanning electron microscopy (SEM) on a TESCAN MIRA3 device (Tescan Orsay Holding, a.s., Czech Republic) and, subsequently, digital image analysis was used to evaluate the number of particles by the statistical method of normal distribution) in the amount in the range of from 45 to 85 % (w/w), a stabilizer in the amount in the range of from 5 to 45 % (w/w), and a foaming agent in the amount in the range of from 2 to 10 % (w/w);
wherein
the wood component is selected from the group comprising wood flour, wood fibers, lignin (for example, commercially available sulfite or sulfate lignin) and/or disintegrated industrial hemp; and wherein the stabilizer is a hemp protein;
and wherein the foaming agent is selected from the group comprising
   - synthetic foaming agents (for example, fatty alcohol ethoxylate of the general formula R(OCH₂CH₂)ₙOH, fatty alcohol ethoxysulfate of the general formula R(OC₂H₄)ₙOSO₃H, alkaline salt of fatty alcohol ethoxysulfate of the general formula R(OC₂H₄)ₙOSO₃M, alkaline salt of fatty alcohol sulfate of the general formula ROSO₃M and poly(ethylene glycol) methyl ether methacrylate of the general formula H₂C=CCH₃CO₂(CH₂CH₂O)ₙCH₃, wherein R is (C8 to C22)alkyl, preferably (C12 to C18)alkyl, more preferably (C12 to C14)alkyl, n is an integer in the range of from 1 to 12, preferably from 2 to 10, and M is K⁺ or Na⁺ or NH₄⁺,
   - and natural foaming agents (for example, live cultures of natural yeasts of the *Saccharomycetaceae* family, specifically of the species *Saccharomyces cerevisiae*).

In one preferred embodiment, the synthetic foaming agent is sodium laureth sulfate of general formula CH₃(CH₂)₁₀CH₂(OCH₂CH₂)ₙOSO₃Na, wherein n is an integer in the range of from 1 to 12; or sodium dodecyl sulfate of general formula CH₃(CH₂)₁₀CH₂OSO₃Na; or ammonium lauryl sulfate of general formula CH₃(CH₂)₁₀CH₂OSO₃NH₄, or poly(ethylene glycol) methyl ether methacrylate H₂C=CCH₃CO₂(CH₂CH₂O)ₙCH₃, wherein n is an integer in the range of from 1 to 12, preferably from 2 to 10.

Lignin is commercially available. Sulphite or sulphate lignin may preferably be used (they are produced as waste products in kraft or sulphite paper production).

The stabilizer (hemp protein) is commercially available (for example from KonoPro s.r.o.). This protein is obtained by vibrating sieve separation of the protein from hemp pulp (hemp pulp (presses) are produced by cold pressing from hemp seeds at a processing temperature of 45-48 °C) from technical hemp, which is ground, for example by the impact grinding method. The finer protein is then separated from the coarser fiber component by vibrating sieve separation.

Yeasts of the Saccharomycetaceae family, specifically the species Saccharomyces cerevisiae, are commonly commercially available. Cultures can be obtained, for example, from the yeast collection at the microbiological department of the Research Institute of Malting and Brewing, internationally registered under the RIMB brand.

The composite material according to the present invention is in the form of an agglomerated porous material having the size of the air pores in the range of from 0.1 nm to 4 nm, preferably in the range of from 1 µm to 3 mm, more preferably from 1.6 µm to 2.5 mm, determined using porometer (Porometer 3G, Quantachrome Instruments, USA) by the method by the capillary flow method of a reference liquid of pure n-pentane with a low surface tension content of 16 to 17 mN/m at a given pressure through a material of a defined thickness per unit time.

A density of said composite material is in the range of from 30 to 610 kg/m³, determined using pycnometer Gay-Lussac method. On a sample of material that was crushed (with a crusher and a grinder) so that the material particles no longer contained pores < 0.1 mm, the density of the material was determined by the ratio of the weight of the material loaded into the pycnometer (dried at 105 °C for 2 hours) to its volume, which was determined when filled with water.

The composite material based on foamed wood according to the present invention is biodegradable, significantly increases thermal insulation, thermal accumulation and/or fire protection properties with optimal mechanical parameters.

In one preferred embodiment, the wood component, the stabilizer and the foaming agent, if the latter is a solid, have their particle size in the range of from 1 nm to 5 mm, determined by SEM as described above, preferably the particle size is in the range of from 100 nm to 1 mm, more preferably from 1 to 100 µm.

In one embodiment, the density of said composite material is in the range of from 30 to 170 kg/m³, preferably from 60 to 140 kg/m³, more preferably from 80 to 120 kg/m³. In this embodiment, said material is preferably intended as a thermal insulation material, especially for cladding and insulating the structural frame of wooden buildings on the exterior sides, implementation into the composition of partitions of internal walls of wooden buildings, into the inter-rafter spaces of attic ceilings. The material has acoustic soundproofing, thermal insulation and thermal accumulation properties while maintaining strength and full renewability for structural applications.

In another embodiment, the density of said composite material is in the range of from 390 to 610 kg/m³, preferably from 430 to 570 kg/m³, more preferably from 460 to 540 kg/m³, most preferably from 430 to 510 kg/m³. In this embodiment, said material is preferably intended as a structural composite material for cladding the structural frame of the column structure of wooden buildings for the external cladding and/or internal partitions, the underlying distribution material under the floor covering and/or the false ceilings of attic rooms. The material has advantageous mechanical properties, a structured surface with excellent adhesion for covering plaster mixtures, advantageous acoustic soundproofing and full recyclability.

The stabilizer is a hemp protein. It can be obtained commercially or it can be produced by a method wherein hemp seeds are first cold pressed at a processing temperature of from 45 to 48 °C (hemp oil is separated), then dried in a dryer for 12 hours to a relative humidity of 2 to 3 %, and then the hemp press (cake) is ground into particles with a mean size in the range of from 1 nm to 3 mm (determined by the SEM method described above) for example, by the impact grinding method) and sieve separation is performed (for example, vibrating sieve separation), in which hemp protein with a particle size of from 1 nm to 0.05 mm is separated from the coarser fiber component.

Said composite material preferably comprises from 10 to 40 % (w/w) of the stabilizer, more preferably from 20 to 35 % (w/w) of the stabilizer, even more preferably from 22 to 34 % (w/w) of the stabilizer. The stabilizer is present in the composite material in a cured form.

The wood component particles in the composite material are prepared by a method of primary mechanical disintegration, for example on a mechanical chipper, to particles with a size of from 1 µm to 10 mm, and subsequently by secondary grinding in a ball mill, until particles of wood flour and/or wood fibers and/or lignin particles and/or industrial hemp with mean sizes in the range of from 1 nm to 5 mm (determined by SEM method), preferably from 100 nm to 1 mm, more preferably from 1 to 100 µm, are obtained. The amount of wood component in the material according to the present invention is in the range of from 45 to 85 % (w/w), preferably from 50 to 65 % (w/w), more preferably from 51 to 62 % (w/w). Before further processing, the wood component particles are preferably dried to a constant relative humidity of 6 ± 1 % in an electric dryer.

The foaming agent is present in the composite material in the amount of from 2 to 10 % (w/w). The synthetic foaming agent is preferably present in the amount of from 3 to 8 % (w/w), preferably from 5 to 8 % (w/w), while the amount of the natural foaming agent is preferably in the range of from 6 to 10 % (w/w), more preferably from 8 to 10 % (w/w).

In one embodiment, it is possible to improve the parameters of the fire reaction class of the material according to the present invention by preferably modifying the above-described composite materials by adding a flame retardant, which is applied already at the stage of preparation of the mixture before the foaming process in production. It is thus possible to achieve a higher fire reaction class, namely B to C, and thus increase the resistance of the composite material to fire. For example, kaolin can serve as a flame retardant and its content in the resulting material is preferably at least 1 % (w/w), more preferably from 2 to 8 % (w/w), even more preferably from 4 to 6 % (w/w). Preferably, kaolin has a particle size in the range of from 1 to 1000 µm, more preferably in the range from 1 to 100 µm, determined by SEM method and evaluated using digital image analysis and statistical method of normal distribution. Kaolin is a rock containing the mineral kaolinite (clay material of the formula Al₂Si₂O₅(OH)₄) and silicate grains.

In one embodiment, the composite material according to the invention further comprises a UV blocker. The content of the UV blocker is in the range of from 1 to 6 % (w/w), preferably in the range of from 3 to 5 % (w/w), based on the total weight of the composite material. Said UV blocker increases the resistance of the composite material to degradation due to UV radiation. Preferably, said UV blocker is selected from the group comprising butylhydroxytoluen (C₁₅H₂₄O), butylhydroxyanisol (C₁₁H₁₆O₂) and 2,6-di-tert-butylphenol (C₁₄H₂₂O). For example, it is possible to use any one of the UV blockers of formulae (I), (II) or (III) or their mixture.

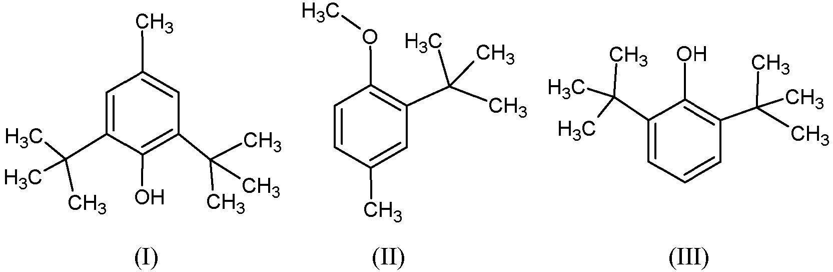

UV blockers are commercially available and known to the skilled in the art. Most preferably, the UV blocker is butylhydroxytoluen in the amount of from 3 to 4 % (w/w).

In one preferred embodiment, the foaming agent is selected from the group comprising sodium laureth sulfate, poly(ethylene glycol) methyl ether methacrylate with molecular mass in the range of from 188 to 540 g/mol (which corresponds to the compounds of general formula H₂C=CCH₃CO₂(CH₂CH₂O)ₙCH₃, wherein n is from 2 to 10), and yeasts of the *Saccharomycetaceae* family.

Another object of the present invention is a method of producing the composite material according to the present invention, which consists in preparing a so-called "slurry" and its subsequent foaming. "Slurry" is prepared by mixing particles of the wood component with mean particle size in the range of from 1 nm to 5 mm with the stabilizer in a weight ratio in the range of from 1:1 to 17:1 (which corresponds to the following percentages of the components in the resulting composite material: from 45 to 85 % (w/w) of wood component particles and from 5 to 45 % (w/w) of the stabilizer). The thus prepared mixture is homogenized and, under constant stirring, 2 to 10 % (w/w) of the foaming agent are added, based on the total weight of the resulting mixture, and the resulting mixture is stirred for at least 10 minutes, preferably for a period in the range of from 10 to 30 minutes. Subsequently, the homogenized mixture is allowed to foam, preferably in a mold of a desired shape at the air temperature in the range of from 20 to 35 °C, preferably from 25 to 30 °C, and relative air humidity in the range of from 40 to 60 %, preferably from 45 to 55 %. After foaming, the composite material is dried at a temperature of from 80 to 100 °C, preferably 80 °C, more preferably for at least 24 hours, thereby activating and curing the stabilizer by denaturing the protein. After the mass has hardened, the material is removed from the mold. Thanks to the use of natural materials, the resulting composite material is fully recyclable and naturally degradable in the case of landfilling and/or composting.

In one embodiment of the method of production of the composite material, intended to achieve the density of the foamed composite material in the range of from 30 kg/m³ to 160 kg/m³, suitable for the production of a thermal insulation material, from 3 to 10 % (w/w), preferably from 5 to 8 % (w/w) of the natural foaming agent is used for preparation of said "slurry", the natural foaming agent being based on live cultures of natural yeasts of the *Saccharomycetaceae* family, preferably *Saccharomyces cerevisiae.* The foaming agent is preferably applied with constant stirring (for example, with a mechanical stirrer, preferably with a blade diameter of from 2 to 6 cm, at a constant speed of from 20 to 30 rpm, preferably 25 rpm) for a period of from 10 to 30 minutes, preferably for 30 minutes, into a mixture of dried particles of wood flour, wood fibers, lignin and/or disintegrated industrial hemp and a stabilizer, in the weight ratio as described above. The resulting "slurry" formed has a density of 1000 ± 10 kg/m³ (density determined by the glass immersion hydrometer method based on the Archimedes principle). For foaming, the mixture must be heated to a temperature in the range of from 60 to 80 °C, preferably to 70 °C, and the system is foamed in at least 30 minutes, preferably in 30 to 60 minutes, more preferably in 60 minutes. After foaming, the composite material is dried, thereby activating and curing the stabilizer.

In another embodiment of the method of production of the composite material, intended to achieve the density of the foamed composite material in the range of from 400 kg/m³ to 600 kg/m³, suitable for the production of a construction material, from 3 to 6 % (w/w), preferably from 5 to 6 % (w/w) of the synthetic foaming agent is used for preparation of said "slurry", the synthetic foaming agent being selected from the group comprising fatty alcohol ethoxylate of the general formula R(OCH₂CH₂)ₙOH, fatty alcohol ethoxysulfate of the general formula R(OC₂H₄)ₙOSO₃H, alkaline salt of fatty alcohol ethoxysulfate of the general formula R(OC₂H₄)ₙOSO₃M, alkaline salt of fatty alcohol sulfate of the general formula ROSO₃M and poly(ethylene glycol) methyl ether methacrylate of the general formula H₂C=CCH₃CO₂(CH₂CH₂O)ₙCH₃, wherein R is (C8 to C22)alkyl, preferably (C12 to C18)alkyl, more preferably (C12 to C14)alkyl, *n* is an integer in the range of from 1 to 12, preferably from 2 to 10, and M is K⁺ or Na⁺ or NH₄⁺.

Said foaming agent is preferably applied with constant stirring, for example with a mechanical stirrer, preferably with a blade diameter of from 2 to 6 cm, at a constant speed of from 20 to 30 rpm, preferably 25 rpm, for a period of from 10 to 30 minutes, preferably for 30 minutes, into a mixture of dried particles of wood flour, wood fibers, lignin and/or disintegrated industrial hemp, and the stabilizer in the weight ratio as described above. The resulting "slurry" formed has a density of 1000 ± 10 kg/m³. For foaming, the mixture does not need to be heated, the foaming takes place at laboratory temperature and the system is foamed within at least 3 minutes, preferably in 3 to 10 minutes, more preferably in 5 minutes. After foaming, the composite material is dried, thereby activating and curing the stabilizer.

If the composite material is to further contain a UV blocker and/or a flame retardant (kaolin), said components are added to the mixture of wood component particles and stabilizer in the appropriate weight ratios (see above) before adding the foaming agent and subsequent foaming.

In one embodiment of the method for producing the composite material, wood component particles with a mean size in the range of from 1 nm to 5 mm (determined by SEM method and evaluated by digital image analysis using the statistical method of normal distribution) are dried to a constant relative humidity ranging from 5 to 7 % prior to preparing the slurry.

Foaming of the slurry into a pre-prepared mold of the desired shape is carried out by placing the slurry in the desired mold, closing its upper surface with a cover to achieve a flat surface on all sides, and allowing the slurry to foam (by heating in the case of use of the natural foaming agent, at laboratory temperature in the case of use of the synthetic foaming agent). Foaming is preferably carried out at an air temperature of 20 to 35 °C, more preferably from 25 to 30 °C, and a relative air humidity of 40 to 60 %, preferably from 45 to 55 %. After foaming, the composite material is dried at a temperature in the range of from 80 to 100 °C, preferably at 80 °C, more preferably for at least 24 hours, thereby activating and curing the stabilizer by denaturing the protein.

The higher the content of the foaming agent and the longer the foaming time, the lower is the density of the resulting composite material. After the slurry has been cured, the composite material is removed from the mold for the given application. The material is fully recyclable and is fully naturally degradable in the case of landfilling and/or composting.

Further object of the present invention is the use of the composite material described above in the construction industry as a structural and/or heat-insulating and/or acoustic material, in particular for the construction of the exterior walls of residential wooden buildings.

### Brief Description of Drawings

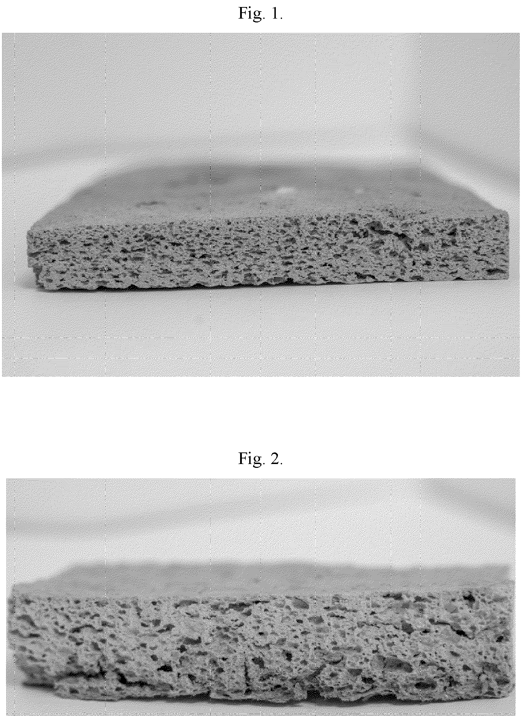

Fig. 1: Microscopic structure of the foamed wood-based material with synthetic foaming agent according to Example 2 (magnification 1: 1000)
Fig. 2: Microscopic structure of the foamed wood-based material with natural foaming agent according to Example 1 (magnification 1: 1000)

### Examples

### Materials and methods

The particle size of wood, lignin, hemp and kaolin was determined by the scanning electron microscopy method (SEM) using the TESCAN MIRA3 device (Tescan Orsay Holding, a.s., ČR), the particle size was evaluated by the statistical method of normal distribution.

The density of the material was determined by the pycnometric Gay-Lussac method. On a sample of material pulverized (with a crusher and a mill) so that the material particles no longer contained pores > 0.1 mm, the density of the material was determined by the ratio of the weight of the material loaded into the pycnometer (dried at 105 °C for 2 hours) to its volume, which was determined when filled with water.

The pore size of the material was determined by the Porometer 3G (Quantachrome Instruments, USA) using the capillary flow method of a reference liquid of pure n-pentane with a low surface tension of 16 to 17 mN/m at a given pressure through the material of a defined thickness per unit time.

### Example 1: Inter-column thermal insulation filling of the column structure of the external shell of a family house of a residential wooden building

The material is based on foamed wood containing sulfite lignin particles with a size ranging from 1 nm to 5 mm in an amount of 61 % by weight, a natural foaming agent based on live cultures of natural yeasts of the *Saccharomycetaceae* family in an amount of 8 % by weight, hemp protein as a stabilizer in an amount of 22 % by weight, UV blocker butylhydroxytoluene (C₁₅H₂₄O) in an amount of 3 % by weight and kaolin as a flame retardant in an amount of 6 % by weight. The material is in the form of foamed boards with dimensions of 100 x 500 x 500 mm (height x width x length), density ρ = 30 kg/m³ and pore size ranging from 2 µm to 3 mm and is intended as a thermal insulation material for cladding and insulating internal spaces within the structure of the structural frame of wooden buildings, implementation into the structure of partitions of internal walls of wooden buildings, into the inter-rafter spaces of attic ceilings. The material has advantageous thermal insulation properties while maintaining strength, and is spontaneously degradable in nature.

### Method of production of said material:

The sulfite lignin particles were disintegrated on a mechanical chipper into particles with size in the range of from 1 µm to 10 mm, and then secondarily ground in a ball mill into particles with size in the range of from 1 nm to 5 mm. Subsequently, they were mixed in the amount of 61 % (w/w) with 22 % (w/w) of the stabilizer (hemp protein, commercially available, for example from KonoPro s.r.o.), which was also ground by the impact grinding method into particles with size in the range of from 1 nm to 5 mm. Subsequently, 3 % (w/w) of the UV blocker butylhydroxytoluene (C₁₅H₂₄O) and 6 % (w/w) of the flame retardant kaolin with a particle size in the range of from 1 to 100 µm were added, and the mixture was then homogenized and activated with a natural foaming agent (live culture of natural yeast of the *Saccharomycetaceae* family in an amount of 8 % (w/w)). The particle size of lignin and kaolin was determined using SEM method.

The resulting slurry with the density of 1000 ± 10 kg/m³ was then placed in a mold of the desired shape, foamed within 60 minutes at the air temperature of 70 °C and a relative air humidity of 45 %. The resulting thermal insulation material was dried at a temperature of 80 °C for 24 hours, which activated and cured (hardened) the stabilizer. The density of the resulting thermal insulation material, which was determined by the pycnometric Gay-Lussac method, was ρ = 30 kg/m³. Determination of density was carried out by grinding the material sample (with a crusher and a grinder) so that the sample particles no longer contained pores > 0.1 mm. The density of the material was subsequently determined by the ratio of the weight of the material (dried at 105 °C for 2 hours) into the pycnometer to its volume, which was determined when filled with water.

The pore size of the thermal insulation material was in the range from 2 µm to 3 mm and was determined by a Porometer 3G (Quantachrome Instruments, USA) using the capillary flow method of a reference liquid of a given pressure through the material of a defined thickness per unit time.

### Example 2: Construction material for cladding the column structure of the external envelope of a family house of a residential wooden building

The material based on foamed wood contained 51 % (w/w) of wood flour particles, 6 % (w/w) of synthetic foaming agent sodium laureth sulfate, 34 % (w/w) of hemp protein, 3 % (w/w) of the UV blocker butylhydroxytoluene (C₁₅H₂₄O) and 6 % (w/w) of the fire retardant kaolin. Hemp protein was made from hemp seeds, which were first pressed at a temperature in the range of from 45 to 48 °C, after separating the hemp oil, the hemp pressings were subsequently dried in a dryer for 12 hours to a relative humidity of up to max. 3 % and then ground into particles with a size ranging from 1 nm to 3 mm using the impact grinding method and vibration sieve separation was performed through a sieve with a mesh size of 3 mm in diameter, during which the hemp protein was separated from the coarser fiber component. The particle size of all components of the composite material was in the range of from 1 nm to 5 mm. The resulting material was in the form of foamed boards with dimensions of 20 x 625 x 2500 mm (height x width x length), density ρ = 550 kg/m³ ± 10 kg/m³ and pore size in the range of from 1.6 µm to 1.1 mm and was intended as a structural material for cladding and insulating the structural frame of wooden buildings on the exterior sides, implementation into the composition of partitions of internal walls of wooden buildings, into the inter-rafter spaces of attic ceilings.

### Method of production of the material:

Spruce wood was disintegrated on a mechanical chipper into particles with size in the range of from 1 µm to 10 mm, followed by grounding on a ball mill into particles with the size in the range of from 1 nm to 5 mm. The resulting wood flour was mixed in the amount of 51 % (w/w) with 34 % (w/w) of the stabilizer (hemp protein), which was ground by the impact grinding method into particles with a size ranging from 1 nm to 5 mm. Subsequently, 3 % (w/w) of the UV blocker butylhydroxytoluene (C₁₅H₂₄O), and 6 % (w/w) of the flame retardant (kaolin) with a particle size ranging from 1 to 100 µm were added to the resulting mixture, followed by 6 % (w/w) of the synthetic foaming agent sodium laureth sulfate. The particle size of wood flour and kaolin was determined by SEM method.

The thereby formed slurry with a density of 1000 ± 10 kg/m³ was foamed into a mold of the desired shape within 5 minutes at an air temperature of 25 °C and a relative air humidity of 45 %. The thermal insulation material was then dried at a temperature of 80 °C for 24 hours, which activated and cured the stabilizer. The density of the resulting composite material was ρ = 550 kg/m³ ± 10 kg/m³. The density was determined by the pycnometric Gay-Lussac method. The material sample was pulverized (with a crusher and a grinder) so that the sample particles no longer contained pores > 0.1 mm. The density was determined by the ratio of the weight of the material (dried at 105 °C for 2 hours) into the pycnometer to its volume, which was determined when filled with water.

The pore size of the composite material ranged from 1.6 µm to 1.1 mm and was determined with a Porometer 3G (Quantachrome Instruments, USA) by the method of capillary flow of a reference liquid at a given pressure through the material of a defined thickness per unit time.

### Example 3: Thermal insulation material for the composition of the dividing wall partition of the column structure of a family house of a residential wooden building on the exterior sides

Thermal insulation material based on foamed wood contained 52 % (w/w) of sulphate lignin with particles with a size ranging from 1 nm to 5 mm, 5 % (w/w) of the synthetic foaming agent poly(ethylene glycol) methyl ether methacrylate (H₂C=CCH₃CO₂(CH₂CH₂O)nCH₃), wherein *n* is an integer in the range of from 1 to 10, 34 % (w/w) of hemp protein, 3 % (w/w) of the UV blocker butylhydroxytoluene (C₁₅H₂₄O) and 6 % (w/w) of the fire retardant kaolin. Hemp protein was made from hemp seeds, which were first pressed at a temperature ranging from 45 to 48 °C; after separating the hemp oil, the hemp pressings were subsequently dried in a dryer for 12 hours to a relative humidity of max. 3 % and then they were ground into particles with a size ranging from 1nm to 3 mm using the impact grinding method and vibration sieve separation was performed with a sieve with a mesh size of 3 mm in diameter, during which the hemp protein was separated from the coarser fiber component. The particle size of all components of the thermal insulation material was in the range of from 1 nm to 5 mm. The resulting material was in the form of a foamed thermal insulation board material with dimensions of 50 x 625 x 625 mm (height x width x length), density ρ = 280 kg/m³ ± 10 kg/m³ and pore size ranging from 1.6 µm to 3 mm and was intended as a thermal insulation material for the composition of dividing wall partitions of the structural frame of wooden buildings.

### Method of production of the material:

The sulphate lignin particles were disintegrated on a mechanical chipper into particles with a size ranging from 1 µm to 10 mm and then secondarily ground in a ball mill into particles with a size ranging from 1 nm to 5 mm. Subsequently, they were mixed in the amount of 52 % (w/w) with 34 % (w/w) of the stabilizer (hemp protein, commercially available, for example from KonoPro s.r.o.), which was also ground by the impact grinding method into particles with a size ranging from 1 nm to 5 mm. Subsequently, 3 % (w/w) of the UV blocker butylhydroxytoluene (C₁₅H₂₄O) and 6 % (w/w) of the fire retardant kaolin with a particle size ranging from 1 to 100 µm were added, and the resulting mixture was homogenized and activated with 5 % (w/w) of the synthetic foaming agent poly(ethylene glycol) methyl ether methacrylate. The particle size of lignin and kaolin was determined by SEM method.

The resulting slurry with density of 1000 ± 10 kg/m³ was foamed into a mold of the desired shape within 5 minutes at an air temperature of 25 °C and a relative air humidity of 45 %. The thermal insulation material was dried at a temperature of 80 °C for 24 hours, which activated and cured the stabilizer. The density of the resulting thermal insulation material, which was determined by the pycnometric Gay-Lussac method, was ρ = 280 kg/m³ ± 10 kg/m³. The density was determined by grinding the material sample (with a crusher and a grinder) so that the sample particles no longer contained pores > 0.1 mm. The density of the material was subsequently determined by the ratio of the weight of the material (dried at 105 °C for 2 hours) into the pycnometer to its volume, which was determined when filled with water.

The pore size of the thermal insulation material was in the range of from 1.6 µm to 3 mm and was determined with a Porometer 3G (Quantachrome Instruments, USA) by the method of capillary flow of a reference liquid at a given pressure through the material of a defined thickness per unit time.

### Example 4: Thermal insulation material for cladding the column structure of the external envelope of a family house of a residential wooden building.

As thermal insulation and a base for plastering the outer shell of the column structure of a family house of a residential wooden building, a wood-based composite material is applied to the exterior, and serves as a base layer for applying the top plaster.

Composite material based on foamed wood contained hemp particles as the wood component in the amount of 58 % (w/w), 8 % (w/w) of the synthetic foaming agent sodium laureth sulfate, 25 % (w/w) of hemp protein as the stabilizer, 4 % (w/w) of the UV blocker butylhydroxytoluene (C₁₅H₂₄O) and 4 % (w/w) of the fire retardant kaolin. The material was in the form of foamed boards with dimensions of 50 x 1000 x 1000 mm (height x width x length) and a density of ρ = 120 kg/m³ ± 5 kg/m³ and was designed as a thermal insulation material for cladding and insulating the structural frame of wooden buildings on the exterior sides of the perimeter walls of wooden buildings, serving as a base layer for plaster. The material has advantageous thermal insulation properties while maintaining its strength, it is advantageous in terms of strength properties as a base material for the top plaster of the external cladding, which adheres well to the surface due to the porous surface, and is biodegradable. The particle size of the individual components of the composite material was in the range of from 1 nm to 5 mm and the pore size was in the range of from 1.9 µm to 2.5 mm.

### Method of production of the material:

Hemp particles were disintegrated on a mechanical chipper into particles with a size of from 1 µm to 10 mm and then secondarily ground in a ball mill into particles with a size of from 1 nm to 5 mm. Then they were mixed in the amount of 58 % (w/w) with 25 % (w/w) of the stabilizer hemp protein with particle size in the range of from 1 nm to 5 mm, obtained commercially from KonoPro s.r.o. Subsequently, 4 % (w/w) of the UV blocker butylhydroxytoluene (C₁₅H₂₄O) and 4 % (w/w) of the flame retardant kaolin with a particle size in the range of from 1 to 100 µm were added, followed by 8 % (w/w) of the synthetic foaming agent sodium laureth sulfate. The particle size of hemp and kaolin was determined using SEM method.

The resulting slurry with a density of 1000 ± 10 kg/m³ was foamed into a form of the desired shape within 6 minutes at an air temperature of 25 °C and a relative air humidity of 45%. The thermal insulation material was dried at a temperature of 80 °C for 24 hours, which activated and cured the stabilizer. The density of the resulting thermal insulation material was ρ = 120 kg/m³ ± 5 kg/m³, which was determined by the pycnometric Gay-Lussac method. The material sample was pulverized (with a crusher and a grinder) so that the sample particles no longer contained pores > 0.1 mm. The density was determined by the ratio of the weight of the material (dried at a temperature of 105 °C for 2 hours) into the pycnometer to its volume, which was determined when filled with water.

The pore size of the thermal insulation material ranged from 1.9 µm to 2.5 mm and was determined with a Porometer 3G (Quantachrome Instruments, USA) using the capillary flow method of a reference liquid at a given pressure through a material of a defined thickness per unit time.

### Example 5: Testing the flexural strength of foamed wood-based construction material - comparison of the method for determining the flexural strength σ by a conclusive test

As part of the research and development of a thermal insulation composite material based on foamed wood, within the project "Foamed wood system and thermal-acoustic material based on foamed wood", Call - Commercialization of FLD outputs funded by the Faculty of Forestry and Wood Science, Czech University of Life Sciences in Prague, the flexural strength σ = [MPa], which characterizes the mechanical strength of the construction composite material according to Example 1, was investigated and determined for the tested construction material based on foamed wood through a conclusive test using the method of determining the bending strength on the universal testing machine TIRA test 2850 (TIRA GmbH, Germany) according to the standard EN 310 (1995) "Wood panels. Determination of the flexural modulus of elasticity and flexural strength". Sampling and preparation of test specimens of the tested construction materials were carried out in accordance with the standard EN 326-1 (1997) "Wood panels - Sampling, cutting and inspection - Part 1: Sampling, cutting of test specimens and expression of test results". Samples with dimensions of 20 x 50 x 450 mm (height x width x length) were first conditioned for 336 hours at a temperature of 20 ± 2 °C and a relative humidity of 65 ± 5% to a stable equilibrium humidity. Subsequently, the average value of the flexural strength σ = [MPa] was determined for the samples of construction materials by the three-point bending method on the universal testing machine TIRA test 2850 (TIRA GmbH, Germany) according to the standard EN 310 (1995) "Wood panels. Determination of the flexural modulus and flexural strength". Mechanical properties of the construction composite material based on foamed wood according to Example 2 were thereby obtained.

For comparison, the same tests were performed with samples of selected wood-based construction materials, which are used in the warehouse of the external cladding of residential buildings and are subject to strength requirements:
a) the construction material based on foamed wood with a density of ρ = 550.0 kg/m³ ± 10.0 kg/m³; manufactured according to Example 2
b) a construction material based on oriented strand board (OSB) with a bulk density ρ = 600.0 kg/m³ ± 10.0 kg/m³;
c) a construction material based on gypsum fiber board with a bulk density ρ = 1100.0 kg/m³ ± 10.0 kg/m³.

**Table 1: Resulting values of bending strength and flexural modulus of elasticity of construction materials according to EN 310**

| **Type of material** | **Bending strength σ [MPa]** | **Flexural modulus of elasticity E [MPa] (in the direction of the main axis)** |
|---|---|---|
| Foamed wood-based construction material from Example 2 | 18.26 | 3 602 |
| Oriented strand board-based construction material (OSB) | 17.11 | 3 543 |
| Gypsum fiberboard-based construction material | 4.03 | 2 522 |

According to the results presented in Table 1, it is clear that of the tested foamed wood-based construction materials used for warehouse of the external cladding of residential wooden buildings, the foamed wood-based construction material from Example 2 showed better flexural strength compared to the oriented strand board (OSB)-based construction material and gypsum fiber board-based construction material according to the current state of the art.

### Example 6: Testing the thermal insulation properties of foamed wood-based thermal insulation material with various thermal insulation materials - comparison using the method of determining the thermal conductivity coefficient λ by a conclusive test

As part of the research and development of thermal insulation material based on foamed wood, the thermal conductivity coefficient λ [W/m.K], which characterizes the amount of heat that passes through the structure of a given thermal insulation material in a given time, was investigated and determined for the tested thermal insulation materials through a conclusive test using the method of determining heat transmission in a calibrated cabinet with an integrated hot plate and temperature probes according to the standard EN 12939 (2001) "Thermal behavior of building materials and products - Determination of thermal resistance by protected hot plate and heat flow meter methods - Products with large thicknesses of high and medium thermal resistance" within the project "Foamed wood system and thermal-acoustic material based on foamed wood", Call - Commercialization of FLD outputs funded by the Faculty of Forestry and Wood Science, Czech University of Life Sciences in Prague. The thermal conductivity coefficient λ is used to calculate the total heat transfer coefficient U [W/m²K] according to Example 2. Samples of tested thermal insulation materials with dimensions of 100 x 500 x 500 mm (height x width x length) were first conditioned for 336 hours at a temperature of 20 ± 2 °C and a relative air humidity of 65 ± 5% to a stable equilibrium humidity. Subsequently, samples of thermal insulation materials with temperature probes applied to the surface of the materials were inserted between the integrated hot and cold plates of a calibrated Taurus TLP 900 cabinet (Netzsch Taurus Instrument GmbH, Germany), which is constructed according to the requirements of the EN 12939 standard. Here, one side of the tested thermal insulation material was heated to a constant temperature of 40 ± 2 °C and the other side was cooled to a temperature of -10 ± 2 °C for 672 hours until the temperature stabilized on the tested thermal insulation material. Based on the calculation defined by the standard EN 12667 (2001) "Thermal behavior of building materials and products - Determination of thermal resistance by protected hot plate and heat flux meter methods - Products with high and medium thermal resistance", the thermal conductivity coefficient λ [W/m.K] was determined, which characterizes the intensity of the heat flow that has passed through the structure of a given thermal insulation material in a given time and which is a characteristic of the thermal insulation efficiency of the material properties, serves to calculate the total heat transfer coefficient U [W/m²K].

For comparison, the same tests were performed with samples of selected thermal insulation materials that are used in the warehouse envelopes of residential buildings and are subject to requirements for thermal insulation properties:
a) the foamed wood based thermal insulation material with a bulk density ρ = 30,0 kg/m³ ± 5,0 kg/m³ according to Example 1;
b) the foamed wood based construction material with a bulk density ρ = 550,0 kg/m³ ± 10,0 kg/m³ according to Example 2;
c) expanded polystyrene foam (EPS) with a bulk density ρ = 35,0 kg/m³ ± 5,0 kg/m³;
d) wood fiber thermal insulation with a bulk density ρ = 60,0 kg/m³ ± 5,0 kg/m³;
e) rock wool with a bulk density ρ = 140,0 kg/m³ ± 5,0 kg/m³;
f) thermal insulation geopolymer with a bulk density ρ = 95,0 kg/m³ ± 5,0 kg/m³.

The resulting determined values of the thermal conductivity coefficient λ [W/m.K] determined by the performed evidential test according to EN 12939 (2011) "Thermal behavior of building materials and products - Determination of thermal resistance by protected hot plate and heat flux meter methods - Products with large thickness with high and medium thermal resistance" are summarized in Table 2.

**Table 2: Resulting values of the thermal conductivity coefficient λ determined according to EN 12939**

| **Type of material** | **Thermal conductivity coefficient λ [W/m.K]** |
|---|---|
| foamed wood based thermal insulation material according to Example 1 | 0.030 |
| foamed wood based construction material according to Example 2 | 0.065 |
| expanded polystyrene foam (EPS) | 0.037 |
| wood fiber thermal insulation | 0.036 |
| rock wool | 0.068 |
| thermal insulation geopolymer | 0.062 |

According to the results shown in Table 2, it is clear that of the tested thermal insulation materials used in the warehouse envelopes of residential buildings, the thermal insulation material made of foamed wood according to Example 1, which has a thermal conductivity coefficient of λ = 0.030 [W/m.K], showed the best values of the thermal conductivity coefficient λ determined according to EN 12939.

### Example 7: Testing the class of reaction to fire of the thermal insulation material based on foamed wood and of various thermal insulation materials - comparison using the method of determining the class of reaction to fire by a conclusive test

As part of the research and development of thermal insulation material based on foamed wood, within the project "Foamed wood system and thermal-acoustic material based on foamed wood", Call - Commercialization of FLD outputs funded by the Faculty of Forestry and Wood Science, Czech University of Life Sciences in Prague, the reaction to fire class of the tested thermal insulation materials was investigated and determined through a conclusive test according to the standard EN 13501-1 (2019) "Fire classification of construction products and building structures - Part 1: Classification according to the results of reaction to fire tests" - the class of reaction to fire, which characterizes whether and how intensively the thermal insulation material contributes to the spread of fire, i.e. how quickly it burns and how much energy it generates. Samples of tested thermal insulation materials with dimensions of 100 x 100 x 100 (height x width x length) were first conditioned for 336 hours at a temperature of 20 ± 2 °C and a relative air humidity of 65 ± 5% to a stable equilibrium humidity. Subsequently, samples of thermal insulation materials with temperature probes were inserted into the Cone Calorimeter ISO 5660-1 device (CLASIC CZ s.r.o., Czech Republic), which is constructed according to the requirements of the ISO 5660-1 (2015) standard "Reaction-to-fire tests; Heat release, smoke production and mass loss rate; Part 1: Heat release rate (cone calorimeter method) and smoke production rate (dynamic measurement)". One side of the sample of the tested thermal insulation material was heated with a direct flame at a temperature of 500 to 800 ± 100 °C until the phase of total degradation of the sample by the flame, reaching residual ash. Based on the rate of weight loss of the tested thermal insulation material sample and the classification of the standard EN 13501-1 (2019) "Fire classification of construction products and building elements
- Part 1: Classification based on the results of reaction to fire tests", the class of reaction to fire was determined in the range A1 - F [dimensionless unit], which characterizes whether and how intensively the thermal insulation material contributes to the spread of fire, i.e. how quickly it burns and how much energy it generates. For comparison, the same tests were performed with samples of selected thermal insulation materials that are used in the external walls of residential buildings and are subject to fire reaction class requirements:
   a) the foamed wood based thermal insulation material with a bulk density ρ = 30,0 kg/m³ ± 5,0 kg/m³ according to Example 1;
   b) expanded polystyrene foam (EPS) with a bulk density ρ = 35,0 kg/m³ ± 5,0 kg/m³;
   c) wood fiber thermal insulation with a bulk density ρ = 60,0 kg/m³ ± 5,0 kg/m³;
   d) rock wool with a bulk density ρ = 140,0 kg/m³ ± 5,0 kg/m³;
   e) thermal insulation geopolymer with a bulk density ρ = 95,0 kg/m³ ± 5,0 kg/m³.

The resulting determined values of the class of reaction to fire determined by the evidence test carried out according to ISO 5660-1 (2015) "Reaction-to-fire tests; Heat release, smoke production and mass loss rate; Part 1: Heat release rate (cone calorimeter method) and smoke production rate (dynamic measurement)" and EN 13501-1 (2019) "Fire classification of building products and building structures - Part 1: Classification according to the results of reaction tests on fire" are summarized in Table 3.

**Table 3: Resulting values of the class of reaction to fire determined according to ISO 5660-1 and EN 13501-1**

| **Type of material** | **Thermal conductivity coefficient λ [W/m.K]** | **Class of reaction to fire** |
|---|---|---|
| foamed wood based thermal insulation material according to Example 1 | 0.030 | B |
| expanded polystyrene foam (EPS) | 0.037 | F |
| wood fiber thermal insulation | 0.036 | E |
| rock wool | 0.068 | A1 |
| thermal insulation geopolymer | 0.062 | A1 |

According to the results shown in Table 3, it is clear that the thermal insulation composite material based on foamed wood according to Example 1 showed reaction to fire class B according to ISO 5660-1 and EN 13501-1, and at the same time, the best values of the coefficient of thermal conductivity λ determined according to EN 12939 of the tested thermal insulation materials used in the storage of the outer skins of residential buildings.

### Example 8: Testing the natural degradability of foamed wood-based thermal insulation material with various thermal insulation materials - comparison using the artificial accelerated aging test method and a conclusive test

As part of the research and development of thermal insulation material based on foamed wood, within the project "Foamed wood system and thermal-acoustic material based on foamed wood", Call - Commercialization of FLD outputs funded by the Faculty of Forestry and Wood Science, Czech University of Life Sciences in Prague, the rate of material degradation was investigated and determined for the tested thermal insulation materials through a conclusive test using the artificial accelerated aging method, wherein thermal insulation samples with dimensions of 20x40x160 mm were conditioned to an equilibrium humidity of 10±2% by weight. Testing of thermal insulation samples using artificial accelerated atmospheric aging was carried out in a UV chamber of QUV Weathering Tester (Q-Lab, USA) based on EN 927-6 (2019) "Coating materials - Coating materials and coating systems for wood in the external environment - Part 6: Exposure of wood coatings to artificial aging using fluorescent UV lamps and water" and in a cycling temperature chamber in temperature cycles 80 °C and -25 °C. The test took place in the following cycles: for 24 h, only a temperature of 45 °C was applied without light. Then, during 144 hours, the phases of UV radiation with an intensity of 1.10 W/m2 at a wavelength of 340 nm and a temperature on a black panel of 65 °C (2.5 hours) alternated with 0.5 h of spraying with distilled water without irradiation. During each 144-hour cycle of the combination of radiation and spraying, samples from the UV chamber were selected and exposed to 3 cycles of alternating temperatures of 80 °C and -25 °C in a climate chamber (a total of 6 hour cycles with a total duration of 6 hours). The total test time in the UV chamber was 1500 hours. The tested samples were measured for color changes using a spectrophotometer, gloss using a gloss meter, and for visual evaluation, in addition to observation using a magnifying glass, a laser scanning microscope was also used. The change in hardness before and after the accelerated aging test was evaluated using the Brinell hardness test ČSN EN ISO 6506-1 (2015) "Metallic materials - Brinell hardness test - Part 1: Test method", with the hardness loss defined as a percentage. In this way, the degree of surface degradation of the tested heat-insulating materials was determined. For comparison, the same tests were performed with samples of selected thermal insulation materials that are used in the warehouse of residential building envelopes and are subject to fire reaction class requirements:
a) the foamed wood based thermal insulation material with a bulk density ρ = 30,0 kg/m³ ± 5,0 kg/m³ according to Example 1;
b) the foamed wood based construction material with a bulk density ρ = 550,0 kg/m³ ± 10,0 kg/m³ according to Example 2;
c) expanded polystyrene foam (EPS) with a bulk density ρ = 35,0 kg/m³ ± 5,0 kg/m³;
d) wood fiber thermal insulation with a bulk density ρ = 60,0 kg/m³ ± 5,0 kg/m³;
e) rock wool with a bulk density ρ = 140,0 kg/m³ ± 5,0 kg/m³;
f) thermal insulation geopolymer with a bulk density ρ = 95,0 kg/m³ ± 5,0 kg/m³.

**Table 4: Quantification of surface degradation of tested thermal insulation materials**

| **Type of material** | **Hardness decrease [%]** |
|---|---|
| foamed wood based thermal insulation material according to Example 1 | 14.24 |
| foamed wood based construction material according to Example 2 | 12.13 |
| expanded polystyrene foam (EPS) | 1.45 |
| wood fiber thermal insulation | 6.54 |
| rock wool | 0 |
| thermal insulation geopolymer | 0 |

According to the results presented in Table 4, it is clear that the degradation determined according to the decrease in the hardness of the surface layers of the thermal insulation materials by the artificial accelerated aging test is a proof test, where the highest degradation rate was proven for the thermal insulation material based on foamed wood (14.24%) and for the construction material based on foamed wood (12.13%).

### Industrial Applicability

The use can be seen mainly in the wood industry, construction and architecture. The invention is particularly suitable for the program of production of the outer shell of types of light frame structures of wooden buildings for residential family houses, community centers, schools, kindergartens, church buildings, senior houses, sports and medical facilities, public administration buildings owned by municipalities and the state, and other types of buildings using the system of on-site construction and/or industrial prefabrication. It concerns in particular the construction of the load-bearing skeleton structure of the outer shell fulfilling the function of covering, supporting and dividing, which, by its material composition and in terms of the parameters of the materials used, must simultaneously meet mechanical requirements, thermal insulation, acoustic resistance and a sufficient degree of fire resistance. The construction system with applied material based on foamed wood can be implemented not only on the construction site, but also on the production line in the factory, and then after they have been taken over at the construction site, only assembly is carried out at the site of use.

### List of abbreviations used:

- ABS: acrylonitrile-butadiene-styrene
- AC: azodicarbonamide
- EPS: expanded polystyrene
- LDPE: low density polyethylene
- HDPE: high density polyethylene
- OSB: oriented strand board
- PE: polyethylene
- PET: polyethylene terephthalate
- POE: polyoxyethylene
- PP: polypropylene
- PVC: olyvinyl chloride
- SBS: styrene-butadiene-styrene

## Claims

1. A composite material based on foamed wood, **characterized in that** it comprises a wood component, a stabilizer and a foaming agent,
wherein the wood component has particle size in the range of from 1 nm to 5 mm, determined by SEM method, and is selected from the group comprising wood flour, wood fibers, lignin and/or industrial hemp;
the stabilizer is hemp protein;
and the foaming agent is selected from the group comprising synthetic and natural foaming agents, wherein
- synthetic foaming agents are selected from the group comprising fatty alcohol ethoxylate of the general formula R(OCH₂CH₂)ₙOH, fatty alcohol ethoxysulfate of the general formula R(OC₂H₄)ₙOSO₃H, alkaline salt of fatty alcohol ethoxysulfate of the general formula R(OC₂H₄)ₙOSO₃M, alkaline salt of fatty alcohol sulfate of the general formula ROSO₃M and poly(ethylene glycol) methyl ether methacrylate of the general formula H₂C=CCH₃CO₂(CH₂CH₂O)ₙCH₃, wherein R is (C8 to C22)alkyl, n is an integer in the range of from 1 to 12, and M is selected from K⁺, Na⁺ and NH₄⁺;
- and natural foaming agents are selected from yeasts of the *Saccharomycetaceae* family,
wherein said composite material has density in the range of from 30 kg/m³ to 610 kg/m³, determined by the pycnometric Gay-Lussac method, and pore size in the range of from 0,1 nm do 4 mm, determined by capillary flow method.

2. The composite material according to claim 1, wherein the content of the wood component is in the range of from 45 to 85 % (w/w), the content of the stabilizer is in the range of from 5 to 45 % (w/w) and the content of the foaming agent is in the range of from 2 to 10 % (w/w).

3. The composite material according to claim 1 or 2, wherein the hemp protein is obtainable by a method wherein hemp seeds are first cold pressed, then the hemp pressings are ground into particles with a size in the range of from 1 nm to 3 mm, determined by SEM method, and sieve separation is performed, in which hemp protein with a particle size in the range of from 1 nm to 50 µm, determined by SEM method, is separated from the coarser fiber component.

4. The composite material according to claim 1, 2 or 3, which further comprises UV blocker in the amount of from 1 to 6 % (w/w), based on the total weight of the composite material, preferably the UV blocker is selected from the group comprising butylhydroxytoluen, butylhydroxyanisol and 2,6-di-tert-butylphenol.

5. The composite material according to any one of the preceding claims 1 to 4, which further comprises kaolin in the amount of from 2 to 8 % (w/w), based on the total weight of the composite material, preferably kaolin has its particle size in the range of from 1 to 1000 µm, determined by SEM method.

6. The composite material according to any one of the preceding claims 1 to 5, wherein the density of said composite material is in the range of from 30 to 170 kg/m³ and the foaming agent is yeast of the *Saccharomycetaceae* family, preferably *Saccharomyces cerevisiae.*

7. The composite material according to any one of the preceding claims 1 to 5, wherein the density of said composite material is in the range of from 390 to 610 kg/m³ and the foaming agent is the synthetic foaming agent, preferably the foaming agent is sodium laureth sulfate or poly(ethylene glycol) methyl ether methacrylate with molecular mass in the range of from 188 to 540 g/mol.

8. A method of production of the composite material according to any one of the preceding claims 1 to 7, **characterized in that** it comprises the following steps:
a) mixing the wood component in the form of wood flour, wood fibers, lignin and/or industrial hemp, wherein the wood component has particle size in the range of from 1 nm to 5 mm, with the stabilizer in a weight ratio in the range of from 1:1 to 17:1;
b) the mixture from step a) is homogenized, and 2 to 10 % (w/w) of the foaming agent are added, based on the total weight of the resulting mixture, at constant stirring, and the resulting mixture is stirred for at least 10 minutes;
c) the homogenized mixture from step b) is foamed and subsequently dried, preferably at the temperature of at least 80 °C, providing the composite material based on foamed wood.

9. The method according to claim 8, wherein kaolin and/or UV blocker is further added to the mixture in step a), wherein the amount of kaolin is in the range of from 2 to 8 % (w/w) and the amount of the UV blocker is in the range of from 1 to 6 % (w/w), based on the total weight of the composite material.

10. The method according to claim 9, wherein the foaming agent is natural yeasts of the *Saccharomycetaceae* family, preferably *Saccharomyces cerevisiae,* and the foaming in step c) is performed at the temperature in the range of from 60 to 80 °C for at least 30 minutes.

11. The method according to claim 9, wherein the foaming agent is the synthetic foaming agent and the foaming in step c) is performed at laboratory temperature for at least 3 minutes.

12. Use of the composite material according to any one of the preceding claims 1 to 7 in construction, preferably as a heat-insulating and/or constructional and/or acoustic-insulating material.

## Patentansprüche

1. Verbundmaterial auf Basis von geschäumtem Holz, **dadurch gekennzeichnet, dass** es eine Holzkomponente, einen Stabilisator und ein Schäummittel umfasst,
wobei die Holzkomponente eine Partikelgröße im Bereich von 1 nm bis 5 mm aufweist, gemessen mittels REM-Methode, und ausgewählt ist aus der Gruppe umfassend Holzmehl, Holzfasern, Lignin und/oder Industriehanf;
der Stabilisator ist Hanfprotein;
und das Schäummittel ausgewählt ist aus der Gruppe umfassend synthetische und natürliche Schäummittel, wobei
- synthetische Schäummittel ausgewählt sind aus der Gruppe umfassend Fettalkoholethoxylat der allgemeinen Formel R(OCH₂CH₂)ₙOH, Fettalkoholethoxysulfat der allgemeinen Formel R(OC₂H₄)ₙOSO₃H, Alkalisalz von Fettalkoholethoxysulfat der allgemeinen Formel R(OC₂H₄)ₙOSO₃M, Alkalisalz von Fettalkoholsulfat der allgemeinen Formel ROSO₃M und Poly(ethylenglykol)methylethermethacrylat der allgemeinen Formel H₂C=CCH₃CO₂(CH₂CH₂O)ₙCH₃, wobei R ein (C₈ bis C₂₂)-Alkyl ist, n eine ganze Zahl im Bereich von 1 bis 12 ist und M ausgewählt ist aus K⁺, Na⁺ und NH₄⁺;
- und natürliche Schäummittel ausgewählt sind aus Hefen der Familie Saccharomycetaceae,
wobei das Verbundmaterial eine Dichte im Bereich von 30 kg/m³ bis 610 kg/m³ aufweist, gemessen mittels der pyknometrischen Gay-Lussac-Methode, und eine Porengröße im Bereich von 0,1 nm bis 4 mm, gemessen mittels der Kapillarfluss-Methode.

2. Verbundmaterial nach Anspruch 1, wobei der Gehalt der Holzkomponente im Bereich von 45 bis 85 Gew.-% liegt, der Gehalt des Stabilisators im Bereich von 5 bis 45 Gew.-% liegt und der Gehalt des Schäummittels im Bereich von 2 bis 10 Gew.-% liegt.

3. Verbundmaterial nach Anspruch 1 oder 2, wobei das Hanfprotein durch ein Verfahren erhältlich ist, bei dem Hanfsamen zunächst kaltgepresst werden, dann der Hanfpresskuchen zu Partikeln mit einer Größe im Bereich von 1 nm bis 3 mm, gemessen mittels REM-Methode, gemahlen wird und eine Siebtrennung durchgeführt wird, bei der Hanfprotein mit einer Partikelgröße im Bereich von 1 nm bis 50 µm, gemessen mittels REM-Methode, von der gröberen Faserkomponente getrennt wird.

4. Verbundmaterial nach Anspruch 1, 2 oder 3, das ferner einen UV-Blocker in einer Menge von 1 bis 6 Gew.-% umfasst, bezogen auf das Gesamtgewicht des Verbundmaterials, wobei der UV-Blocker vorzugsweise ausgewählt ist aus der Gruppe umfassend Butylhydroxytoluol, Butylhydroxyanisol und 2,6-Di-tert-butylphenol.

5. Verbundmaterial nach einem der vorhergehenden Ansprüche 1 bis 4, das ferner Kaolin in einer Menge von 2 bis 8 Gew.-% umfasst, bezogen auf das Gesamtgewicht des Verbundmaterials, wobei Kaolin vorzugsweise eine Partikelgröße im Bereich von 1 bis 1000 µm aufweist, gemessen mittels REM-Methode.

6. Verbundmaterial nach einem der vorhergehenden Ansprüche 1 bis 5, wobei die Dichte des Verbundmaterials im Bereich von 30 bis 170 kg/m³ liegt und das Schäummittel eine Hefe der Familie Saccharomycetaceae ist, vorzugsweise *Saccharomyces cerevisiae*.

7. Verbundmaterial nach einem der vorhergehenden Ansprüche 1 bis 5, wobei die Dichte des Verbundmaterials im Bereich von 390 bis 610 kg/m³ liegt und das Schäummittel das synthetische Schäummittel ist, wobei das Schäummittel vorzugsweise Natriumlaurethsulfat oder Poly(ethylenglykol)methylethermethacrylat mit einer Molekülmasse im Bereich von 188 bis 540 g/mol ist.

8. Verfahren zur Herstellung des Verbundmaterials nach einem der vorhergehenden Ansprüche 1 bis 7, **dadurch gekennzeichnet, dass** es die folgenden Schritte umfasst:
a) Mischen der Holzkomponente in Form von Holzmehl, Holzfasern, Lignin und/oder Industriehanf, wobei die Holzkomponente eine Partikelgröße im Bereich von 1 nm bis 5 mm aufweist, mit dem Stabilisator in einem Gewichtsverhältnis im Bereich von 1:1 bis 17:1;
b) die Mischung aus Schritt a) wird homogenisiert, und 2 bis 10 Gew.-% des Schäummittels, bezogen auf das Gesamtgewicht der resultierenden Mischung, werden unter konstantem Rühren zugegeben, und die resultierende Mischung wird für mindestens 10 Minuten gerührt;
c) die homogenisierte Mischung aus Schritt b) wird geschäumt und anschließend getrocknet, vorzugsweise bei einer Temperatur von mindestens 80 °C, unter Bereitstellung des Verbundmaterials auf Basis von geschäumtem Holz.

9. Verfahren nach Anspruch 8, wobei der Mischung in Schritt a) ferner Kaolin und/oder UV-Blocker zugegeben wird, wobei die Menge an Kaolin im Bereich von 2 bis 8 Gew.-% und die Menge des UV-Blockers im Bereich von 1 bis 6 Gew.-% liegt, bezogen auf das Gesamtgewicht des Verbundmaterials.

10. Verfahren nach Anspruch 9, wobei das Schäummittel natürliche Hefen der Familie *Saccharomycetacea*e ist, vorzugsweise *Saccharomyces cerevisiae*, und das Schäumen in Schritt c) bei einer Temperatur im Bereich von 60 bis 80 °C für mindestens 30 Minuten durchgeführt wird.

11. Verfahren nach Anspruch 9, wobei das Schäummittel das synthetische Schäummittel ist, und das Schäumen in Schritt c) bei Labortemperatur für mindestens 3 Minuten durchgeführt wird.

12. Verwendung des Verbundmaterials nach einem der vorhergehenden Ansprüche 1 bis 7 im Bauwesen, vorzugsweise als wärmedämmendes und/oder konstruktives und/oder schalldämmendes Material.

## Revendications

1. Un matériau composite à base de bois moussé, **caractérisé en ce qu'**il comprend un composant de bois, un stabilisant et un agent moussant,
dans lequel le composant de bois a une taille de particule dans la plage de 1 nm à 5 mm, déterminée par la méthode MEB, et est choisi dans le groupe comprenant la farine de bois, les fibres de bois, la lignine et/ou le chanvre industriel ;
le stabilisant est une protéine de chanvre ;
et l'agent moussant est choisi dans le groupe comprenant des agents moussants synthétiques et naturels, dans lequel
- les agents moussants synthétiques sont choisis dans le groupe comprenant l'éthoxylate d'alcool gras de formule générale R(OCH₂CH₂)ₙOH, l'éthoxysulfate d'alcool gras de formule générale R(OC₂H₄)ₙOSO₃H, le sel alcalin d'éthoxysulfate d'alcool gras de formule générale R(OC₂H₄)ₙOSO₃M, le sel alcalin de sulfate d'alcool gras de formule générale ROSO₃M et le méthacrylate d'éther méthylique de poly(éthylène glycol) de formule générale H₂C=CCH₃CO₂(CH₂CH₂O)ₙCH₃, où R est un (C₈ à C₂₂)alkyle, n est un nombre entier dans la plage de 1 à 12, et M est choisi parmi K⁺, Na⁺ et NH₄⁺ ;
- et les agents moussants naturels sont choisis parmi les levures de la famille des *Saccharomycetaceae*,
dans lequel ledit matériau composite a une masse volumique dans la plage de 30 kg/m³ à 610 kg/m³, déterminée par la méthode pycnométrique de Gay-Lussac, et une taille de pore dans la plage de 0,1 nm à 4 mm, déterminée par la méthode d'écoulement capillaire.

2. Le matériau composite selon la revendication 1, dans lequel la teneur en composant de bois est dans la plage de 45 à 85 % (p/p), la teneur en stabilisant est dans la plage de 5 à 45 % (p/p) et la teneur en agent moussant est dans la plage de 2 à 10 % (p/p).

3. Le matériau composite selon la revendication 1 ou 2, dans lequel la protéine de chanvre est susceptible d'être obtenue par un procédé dans lequel les graines de chanvre sont d'abord pressées à froid, puis les tourteaux de chanvre sont broyés en particules ayant une taille dans la plage de 1 nm à 3 mm, déterminée par la méthode MEB, et une séparation par tamisage est réalisée, dans laquelle la protéine de chanvre ayant une taille de particule dans la plage de 1 nm à 50 µm, déterminée par la méthode MEB, est séparée du composant fibreux plus grossier.

4. Le matériau composite selon la revendication 1, 2 ou 3, qui comprend en outre un bloqueur UV en une quantité de 1 à 6 % (p/p), par rapport au poids total du matériau composite, de préférence le bloqueur UV est choisi dans le groupe comprenant le butylhydroxytoluène, le butylhydroxyanisole et le 2,6-di-tert-butylphénol.

5. Le matériau composite selon l'une quelconque des revendications précédentes 1 à 4, qui comprend en outre du kaolin en une quantité de 2 à 8 % (p/p), par rapport au poids total du matériau composite, de préférence le kaolin a une taille de particule dans la plage de 1 à 1000 µm, déterminée par la méthode MEB.

6. Le matériau composite selon l'une quelconque des revendications précédentes 1 à 5, dans lequel la masse volumique dudit matériau composite est dans la plage de 30 à 170 kg/m³ et l'agent moussant est une levure de la famille des *Saccharomycetaceae*, de préférence *Saccharomyces cerevisiae*.

7. Le matériau composite selon l'une quelconque des revendications précédentes 1 à 5, dans lequel la masse volumique dudit matériau composite est dans la plage de 390 à 610 kg/m³ et l'agent moussant est l'agent moussant synthétique, de préférence l'agent moussant est le laureth sulfate de sodium ou le méthacrylate d'éther méthylique de poly(éthylène glycol) ayant une masse moléculaire dans la plage de 188 à 540 g/mol.

8. Un procédé de production du matériau composite selon l'une quelconque des revendications précédentes 1 à 7, **caractérisé en ce qu'**il comprend les étapes suivantes :
a) mélange du composant de bois sous la forme de farine de bois, de fibres de bois, de lignine et/ou de chanvre industriel, dans lequel le composant de bois a une taille de particule dans la plage de 1 nm à 5 mm, avec le stabilisant dans un rapport pondéral dans la plage de 1:1 à 17:1 ;
b) le mélange de l'étape a) est homogénéisé, et 2 à 10 % (p/p) de l'agent moussant sont ajoutés, par rapport au poids total du mélange résultant, sous agitation constante, et le mélange résultant est agité pendant au moins 10 minutes ;
c) le mélange homogénéisé de l'étape b) est moussé puis séché, de préférence à une température d'au moins 80 °C, fournissant le matériau composite à base de bois moussé.

9. Le procédé selon la revendication 8, dans lequel du kaolin et/ou un bloqueur UV est en outre ajouté au mélange à l'étape a), dans lequel la quantité de kaolin est dans la plage de 2 à 8 % (p/p) et la quantité du bloqueur UV est dans la plage de 1 à 6 % (p/p), par rapport au poids total du matériau composite.

10. Le procédé selon la revendication 9, dans lequel l'agent moussant est des levures naturelles de la famille des *Saccharomycetaceae*, de préférence *Saccharomyces cerevisiae*, et le moussage à l'étape c) est réalisé à une température dans la plage de 60 à 80 °C pendant au moins 30 minutes.

11. Le procédé selon la revendication 9, dans lequel l'agent moussant est l'agent moussant synthétique et le moussage à l'étape c) est réalisé à température de laboratoire pendant au moins 3 minutes.

12. Utilisation du matériau composite selon l'une quelconque des revendications précédentes 1 à 7 dans la construction, de préférence en tant que matériau d'isolation thermique et/ou de construction et/ou d'isolation acoustique.
